# EUROPEAN PATENT APPLICATION

(11) **EP 4 821 383 A1**
(43) Date of publication of application: **14.10.2026**
(21) Application number: 26159204.2
(22) Date of filing: 18.02.2026
(51) Int. Cl.: A41D 19/00, A41D 19/015

(54) **ADDITIVELY MANUFACTURED GLOVES**

(30) Priority: 07.03.2025 US 202519073996
(71) Applicant: adidas AG, 91074 Herzogenaurach (DE)
(72) Inventor: DELGADO, Christian Manuel Arias, Portland, OR, 97217 (US); CORCORAN-TADD, Fionn, Portland, OR, 97217 (US); PADOVANI, Matteo E., Portland, OR, 97217 (US)
(74) Representative: Bardehle Pagenberg Partnerschaft mbB Patentanwälte Rechtsanwälte

(57) **Abstract**

Gloves comprising an outer skin, an inner skin, and a core disposed between the outer skin and the inner skin. The outer skin, the inner skin, and the core can be integrally formed. Features of the outer skin, inner skin, and/or core can be manufactured to provide desired properties for the glove.

## Description

### TECHNICAL FIELD

The present disclosure relates to additively manufactured gloves.

### BACKGROUND

When designing gloves to be used for participation in athletic activities, the use of the gloves when engaging in those activities should be considered. For example, securing a glove to the hand of the user can reduce undesired movement of the glove on the hand of the user. As another example, breathability of the glove can reduce odors caused by sweat. As yet another example, maintaining glove function while increasing protection of the hand of the user can also be considered. Hence, there is a continuing need for gloves designed to improve the overall properties of the glove.

### BRIEF SUMMARY

A first embodiment (I) of the present disclosure is directed to a glove, comprising: a palm portion; a wrist portion extending from the palm portion; and finger portions extending from the palm portion, the finger portions comprising: an outer skin; an inner skin; and a core disposed between the outer skin and the inner skin and extending from the inner skin and toward the outer skin; wherein the outer skin, the inner skin, and the core are integrally formed.

In a second embodiment (II), in the glove of the first embodiment (I), the core comprises struts extending from the inner skin and toward the outer skin, wherein the struts are oriented perpendicular to one or more of the outer skin or the inner skin.

In a third embodiment (III), in the glove of the first embodiment (I), the core comprises struts extending from the inner skin and toward the outer skin, wherein the struts are oriented at an angle greater than or equal to 0 degrees and less than or equal to 90 degrees relative to one or more of the outer skin or the inner skin.

In a fourth embodiment (IV), in the glove according to any one of embodiments (I)-(III), the core comprises struts coupled directly to the inner skin and the outer skin.

In a fifth embodiment (V), in the glove according to any one of embodiments (I)-(IV), one or more of the outer skin or the inner skin are devoid of unit cells arranged in a repeated lattice structure.

In a sixth embodiment (VI), in the glove according to any one of embodiments (I)-(V), one or more of the outer skin or the inner skin comprises a plurality of continuous beams extending adjacent to each other.

In a seventh embodiment (VII), the glove of the sixth embodiment (VI) comprises struts that extend from a continuous beam of the outer skin to a continuous beam of the inner skin.

In an eighth embodiment (VIII), in the glove according to any one of embodiments (VI)-(VII), a spacing distance between adjacent, continuous beams is constant along a specified length.

In a ninth embodiment (IX), in the glove according to any one of embodiments (VI)-(VII), a spacing distance between adjacent, continuous beams varies along a specified length.

In a tenth embodiment (X), in the glove according to any one of embodiments (VI)-(IX), two or more adjacent continuous beams merge together at a surface contour of the glove.

In an eleventh embodiment (XI), in the glove according to any one of embodiments (VI)-(X), one or more of the plurality of continuous beams extends continuously along a distance of at least 5 centimeters.

In a twelfth embodiment (XII), in the glove according to any one of embodiments (I)-(XI), at least a portion of one or more of the outer skin or the inner skin comprises a continuous, non-porous skin.

In a thirteenth embodiment (XIII), in the glove according to any one of embodiments (I)-(XII), the inner skin defines a surface contour that faces a hand of a user during use, and the outer skin defines a surface contour that faces away from the hand of the user during use.

A fourteenth embodiment (XIV) of the present disclosure is directed to a glove, comprising: a palm portion; a wrist portion extending from the palm portion; and finger portions extending from the palm portion; wherein the palm portion and the finger portions comprise: an outer skin; an inner skin; and a core disposed between the outer skin and the inner skin and extending from the inner skin and toward the outer skin; wherein the outer skin, the inner skin, and the core are integrally formed.

In a fifteenth embodiment (XV), in the glove of the fourteenth embodiment (XIV), the core comprises struts extending from the inner skin and toward the outer skin, wherein the struts are oriented perpendicular to one or more of the outer skin or the inner skin.

In a sixteenth embodiment (XVI), in the glove of the fourteenth amendment (XIV), the core comprises struts extending from the inner skin and toward the outer skin, wherein the struts are oriented at an angle greater than or equal to 0 degrees and less than or equal to 90 degrees relative to one or more of the outer skin or the inner skin.

In a seventeenth embodiment (XVII), in the glove according to any one of embodiments (XIV)-(XVI), the core comprises struts coupled directly to the inner skin and the outer skin.

In an eighteenth embodiment (XVIII), in the glove according to any one of embodiments (XIV)-(XVII), one or more of the outer skin or the inner skin are devoid of unit cells arranged in a repeated lattice structure.

In a nineteenth embodiment (XIX), in the glove according to any one of embodiments (XIV)-(XVIII), one or more of the outer skin or the inner skin comprises a plurality of continuous beams extending adjacent to each other.

In a twentieth embodiment (XX), the glove of the nineteenth embodiment (XIX) comprises struts that extend from a continuous beam of the outer skin to a continuous beam of the inner skin.

### BRIEF DESCRIPTION OF THE DRAWINGS/FIGURES

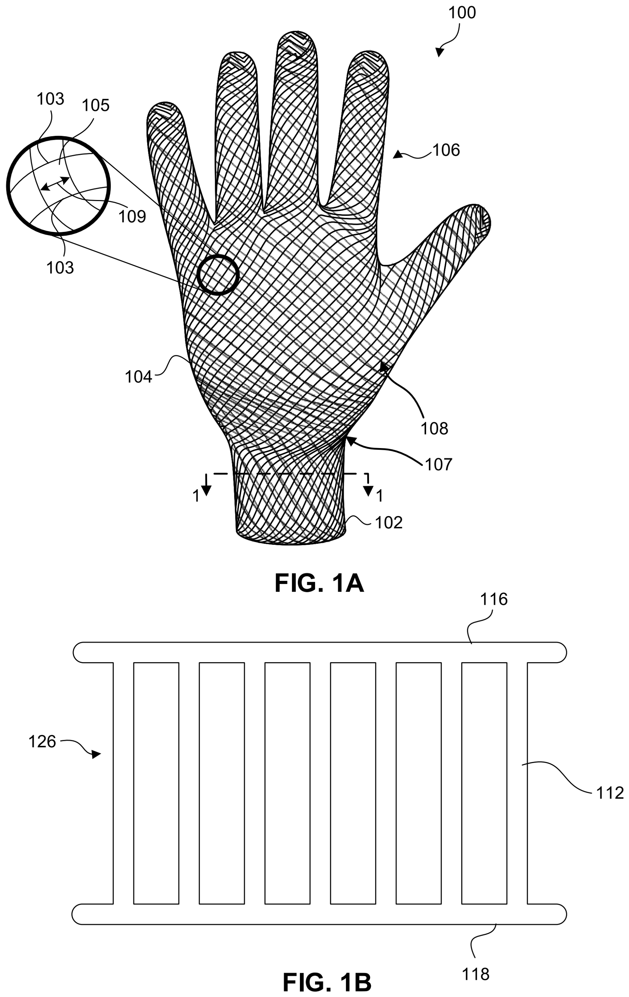

FIG. 1A shows a glove, according to some embodiments.
FIG. 1B shows a cross-sectional view of the glove of FIG. 1A, according to some embodiments.

### DETAILED DESCRIPTION

The indefinite articles "a," "an," and "the" include plural referents unless clearly contradicted or the context clearly dictates otherwise.

The term "comprising" is an open-ended transitional phrase. A list of elements following the transitional phrase "comprising" is a non-exclusive list, such that elements in addition to those specifically recited in the list can also be present. The phrase "consisting essentially of" limits the composition of a component to the specified materials and those that do not materially affect the basic and novel characteristic(s) of the component. The phrase "consisting of" limits the composition of a component to the specified materials and excludes any material not specified.

Where a range of numerical values comprising upper and lower values is recited herein, unless otherwise stated in specific circumstances, the range is intended to include the endpoints thereof, and all integers and fractions within the range. It is not intended that the disclosure or claims be limited to the specific values recited when defining a range. Further, when an amount, concentration, or other value or parameter is given as a range, one or more ranges, or as list of upper values and lower values, this is to be understood as specifically disclosing all ranges formed from any pair of any upper range limit or value and any lower range limit or value, regardless of whether such pairs are separately disclosed.

Conventional gloves used for athletic activities can provide some advantages for a user during an athletic activity. However, conventional gloves also have some disadvantages. For example, conventional gloves can be secured to the hand of the user at the wrist, thereby allowing relative movement between the remaining portions of the glove and the hand of the user. Conventional gloves can also trap sweat from the user, causing unpleasant odors. Additionally, trapped sweat and/or other moisture can affect the fit of the glove on the hand of the user by allowing the glove to slip relative to the hand. Some conventional gloves can provide additional protection at specific portions of the gloves, however the overall performance and function of the gloves can be negatively impacted by the additional protection.

Gloves according to embodiments of the present application, are designed to provide various advantageous effects for a user. The gloves can facilitate increased athletic performance for a wearer participating in a sport, for example football, American football, hockey, baseball, or any other type of sport in which the user can wear a glove.

Gloves according to embodiments of the present application are designed to at least partially address and/or pursue these problems with conventional gloves and to provide various advantageous effects for a user. In some embodiments, the gloves can be configured to conform to the hand of the user.

FIG. 1A shows a glove 100, according to some embodiments. In some embodiments, the glove 100 can comprise a glove used for athletic competition. For example, the glove 100 can comprise an athletic glove used for football, American football, hockey, baseball, softball, etc. Glove 100 can comprise any combination of structures or features described herein.

The glove 100 can comprise a wrist portion 102, a central portion 104, and finger portions 106. In some embodiments, the wrist portion 102, the central portion 104, and the finger portions 106 can be integrally formed as a single part. Examples of manufacturing techniques that can be used to form components in the form of a single, integral part comprise molding, casting, and additive manufacturing (three-dimensional (3-D) printing). In some embodiments, the wrist portion 102 can comprise a braided 3-D printed structure (for example, the wrist portion 102 can comprise strands of 3-D printed structures that can be braided together to form the wrist portion 102). Accordingly, any component or portion of gloves described herein can be an integrally formed glove part that connects to one or more other integrally formed glove parts as described herein. In some embodiments, any of the gloves described herein can comprise a pre-formed shape such that the hand of the user takes the preformed shape when the user is wearing the glove and the hand is at rest. For example, any of the gloves described herein can comprise a shape in which one or more of the fingers are flexed toward the palm portion, away from the palm portion, or a combination thereof.

Exemplary additive manufacturing techniques include for example, selective laser sintering, selective laser melting, selective heat sintering, stereo lithography, fused deposition modeling, or 3-D printing in general. Various additive manufacturing techniques related to articles of footwear are described for example in US 2009/0126225, WO 2010/126708, US 2014/0300676, US 2014/0300675, US 2014/0299009, US 2014/0026773, US 2014/0029030, WO 2014/008331, WO 2014/015037, US 2014/0020191, EP 2564719, EP 2424398, and US 2012/0117825. In some embodiments, the additive manufacturing process can include a continuous liquid interface production process. For example, the additive manufacturing process can include a continuous liquid interface production process as described in U.S. Pat. No. 9,453,142, issued on September 27, 2016, which is hereby incorporated in its entirety by reference thereto.

In some embodiments, 3-D printing a glove, or a component thereof, can comprise 3-D printing the glove or component in an intermediate green state, shaping and/or assembling the glove or component in the green state, and curing the green state in its final shape. In some embodiments, 3-D printing a glove, or component thereof, can comprise 3-D printing the glove or component thereof in an intermediate green state, expanding and/or assembling the intermediate green state, and curing the green state in its final shape. In some embodiments, 3-D printing a glove, or component thereof, can comprise 3-D printing the glove or component in an intermediate green state, expanding and/or assembling the intermediate green state, shaping the article or component in the green state, and curing the green state in its final shape.

In some embodiments, 3-D printing a glove, or component thereof, can comprise 3-D printing multiple components in an intermediate green state, shaping and/or assembling the components in the green state, and curing the green state in its final shape. In some embodiments, 3-D printing a glove, or component thereof, can comprise 3-D printing multiple components in an intermediate green state, expanding and/or assembling the components in the green state, and curing the green state in its final shape.

Techniques for producing an intermediate green state object from resins by additive manufacturing are known. Suitable techniques include bottom-up and top-down additive manufacturing, generally known as stereolithography. Such methods are known and described in, for example, U.S. Patent No. 5,236,637 to Hull, US Patent Nos. 5,391,072 and 5,529,473 to Lawton, U.S. Patent No. 7,438,846 to John, US Patent No. 7,892,474 to Shkolnik, U.S. Patent No. 8,110,135 to El-Siblani, U.S. Patent Application Publication No. 2013/0292862 to Joyce, and US Patent Application Publication No. 2013/0295212 to Chen et al. The disclosures of these patents and applications are incorporated by reference herein in their entirety.

In some embodiments, the additive manufacturing step can be carried out by one of the family of methods sometimes referred to as continuous liquid interface production (CLIP). CLIP is known and described in, for example, US Patent Nos. 9,211,678; 9,205,601; 9,216,546; and others; in J. Tumbleston et al., Continuous liquid interface production of 3D Objects, Science 347, 1349-1352 (2015); and in R. Janusziewcz et al., Layerless fabrication with continuous liquid interface production, Proc. Natl. Acad. Sci. USA 113, 11703-11708 (October 18, 2016). Other examples of methods and apparatus for carrying out particular embodiments of CLIP include, but are not limited to: Batchelder et al., US Patent Application Pub. No. US 2017/0129169 (May 11, 2017); Sun and Lichkus, US Patent Application Pub. No. US 2016/0288376 (Oct. 6, 2016); Willis et al., US Patent Application Pub. No. US 2015/0360419 (Dec. 17, 2015); Lin et al., US Patent Application Pub. No. US 2015/0331402 (Nov. 19, 2015); D. Castanon, US Patent Application Pub. No. US 2017/0129167 (May 11, 2017). B. Feller, US Pat App. Pub. No. US 2018/0243976 (published Aug 30, 2018); M. Panzer and J. Tumbleston, US Pat App Pub. No. US 2018/0126630 (published May 10, 2018); K. Willis and B. Adzima, US Pat App Pub. No. US 2018/0290374 (Oct. 11, 2018) L. Robeson et al., PCT Patent Pub. No. WO 2015/164234 (see also US Patent Nos. 10,259,171 and 10,434,706); and C. Mirkin et al., PCT Patent Pub. No. WO 2017/210298 (see also US Pat. App. US 2019/0160733). The disclosures of these patents and applications are incorporated by reference herein in their entirety.

While stereolithography techniques such as CLIP can be preferred, it will be appreciated that other additive manufacturing techniques, such as jet printing (see, e.g., US Patent No. 6,259,962 to Gothait and US Patent App. Serial No. US 2020/0156308 to Ramos et al.), can also be used.

In some embodiments, any component of a glove described herein (for example, the wrist portion 102, the central portion 104, the finger portions 106, etc.) can comprise a three-dimensional structure comprising a plurality of struts. As a non-limiting example shown in FIG. 1A, one or more of the wrist portion 102, the central portion 104, or the finger portions 106 can comprise a three-dimensional structure 108 comprising struts 112 defining a three-dimensional structure and skins (for example, an outer skin 116 and an inner skin 118) at which the struts 112 are connected (as shown in FIG. 1B). In some embodiments, the three-dimensional structure 108 can be an additively manufactured (3-D printed) structure.

Additive manufacturing processes can create components that are a single piece. For example, an additive manufacturing process can create components that are continuous and do not comprise any seams or other types of material discontinuities. Thus, at least one of the parts or portions of gloves described herein (for example, the wrist portion 102, the central portion 104, the finger portions 106, etc.) can be a single piece.

FIG. 1B shows a cross-sectional view across 1-1 of the glove 100 of FIG. 1A, according to some embodiments. In some embodiments, all or a portion of the structure of the glove 100 can comprise the outer skin 116, the inner skin 118, and a core 126 disposed between the outer skin 116 and the inner skin 118 and extending between the outer skin 116 and the inner skin 118. In some embodiments, the inner skin 118 can be omitted such that the structure of the glove 100 can comprise the outer skin 116 and the core 126. In some embodiments, the outer skin 116 can be omitted such that the structure of the glove 100 can comprise the inner skin 118 and the core 126.

The core 126 can comprise struts 112 oriented perpendicular to the outer skin 116, the inner skin 118, or both. In some embodiments, the struts 112 of core 126 can be oriented at an angle between 0 and 90 degrees relative to the outer skin 116 and the inner skin 118. Thus, in such embodiments, the core 126 may not comprise unit cells arranged in a repeated lattice structure. Struts 112 of the core 126 can comprise opposing ends directly coupled to outer skin 116 and inner skin 118, respectively.

In some embodiments, the outer skin 116, inner skin 118, or both can be devoid of unit cells arranged in a repeated lattice structure. In some embodiments, the outer skin 116, inner skin 118, or both can comprise a plurality of continuous beams 103 (shown in FIG. 1A) extending adjacent to each other and defining at least part of the glove 100. For example, the plurality of continuous beams 103 can define at least part of the wrist portion 102, the central portion 104, the finger portions 106, or a combination thereof. Adjacent continuous beams 103 can be separated by spaces 105 along at least a portion of the wrist portion 102, the central portion 104, the finger portions 106, or a combination thereof. Continuous beams 103 of the outer skin 116 and/or inner skin 118 may not define a portion of a repeating unit cell arranged in a repeated lattice. In embodiments comprising struts 112, struts 112 can extend from a continuous beam 103 of outer skin 116 to a continuous beam 103 of inner skin 118. Alternatively, in some embodiments, all or a portion of outer skin 116, inner skin 118, or both can comprise a continuous, non-porous skin.

In embodiments comprising continuous beams 103, a surface contour of all or a portion of glove 100 (for example, a surface contour of wrist portion 102, central portion 104, finger portions 106, or a combination thereof) can be defined the continuous beams 103. In such embodiments, grooves or recesses between continuous beams 103 do not define the shape of the surface contour. Rather, the surface contour is characterized by the overall outmost shape of wrist portion 102, central portion 104, and/or finger portions 106 defined by inner skin 118, outer skin 116, or both. The surface contour defined by the inner skin 118 is the surface contour facing a wearer's hand during use. The surface contour defined by the outer skin 116 is the surface contour facing away from a wearer's hand during use.

In some embodiments, continuous beams 103 can extend continuously at the surface contour, with the plurality of continuous beams 103 extending continuously along wrist portion 102, central portion 104, and/or finger portions 106. In some embodiments, one or more continuous beams 103 can extend continuously along a distance of at least 5 centimeters. In some embodiments, one or more of the continuous beams 103 can extend continuously along a distance of at least 10 centimeters. In some embodiments, one or more of the continuous beams 103 can extend continuously along a distance of at least 15 centimeters. In some embodiments, one or more of the continuous beams 103 can extend continuously in a straight line. In some embodiments, one or more of the continuous beams 103 can extend continuously in a curved line.

In some embodiments, adjacent continuous beams of the plurality of continuous beams 103 can extend substantially parallel to each other at the surface contour. As used herein, "substantially parallel" means that two or more of the continuous beams 103 either: (i) extend along straight or curved lines that are exactly a parallel to each other for a specified length, or (ii) extend along straight or curved lines that extend +/- 10 degrees relative to parallel of each other for a specified length. In some embodiments, the specified length can be at least can be at least 5 mm, at least 10 mm, or at least 15 mm.

In embodiments comprising the plurality of continuous beams 103 that extend substantially parallel to each other at the surface contour, the plurality of continuous beams 103 can define a lenticular structure at the surface contour.

Adjacent continuous beams 103 extending at the surface contour can be spaced apart from each other by the space 105, as illustrated in for example FIG. 1A. In some embodiments, the space 105 can comprise a spacing distance 109 between adjacent continuous beams 103 that can range from greater than or equal to 0.1 mm to less than or equal to 10 mm.

In some embodiments, the spacing distance 109 between two adjacent continuous beams 103 can be constant along a specified length, for example at least 5 mm, at least 10 mm, or at least 15 mm. In such embodiments, the two adjacent continuous beams 103 can extend along straight or curved lines that are exactly a parallel to each other for the specified length.

In some embodiments, the spacing distance 109 between two adjacent continuous beams 103 can vary along the inner skin 118 or outer skin 116. In such embodiments, the two adjacent continuous beams 103 can extend along straight or curved lines that are not exactly parallel to each other for a specified length. In some embodiments, inner skin 118 or outer skin 116 can comprise one or more zones 107 where the spacing distance 109 between two or more adjacent continuous beams 103 is zero. In such embodiments, the two or more adjacent continuous beams 103 can merge together at the surface contour. In some embodiments, the two or more adjacent continuous beams 103 can be spaced apart as the continuous beams 103 approach the zone 107, merge in the zone 107, and then diverge in a spaced apart relationship after the zone 107. In some embodiments, the zone 107 can comprise three or more, four or more, or five or more adjacent beams 103 that merge together.

While various embodiments have been described herein, they have been presented by way of example, and not limitation. It should be apparent that adaptations and modifications are intended to be within the meaning and range of equivalents of the disclosed embodiments, based on the teaching and guidance presented herein. It therefore will be apparent to one skilled in the art that various changes in form and detail can be made to the embodiments disclosed herein without departing from the spirit and scope of the present disclosure. The elements of the embodiments presented herein are not necessarily mutually exclusive, but can be interchanged to meet various situations as would be appreciated by one of skill in the art.

The examples are illustrative, but not limiting, of the present disclosure. Other suitable modifications and adaptations of the variety of conditions and parameters normally encountered in the field, and which would be apparent to those skilled in the art, are within the spirit and scope of the disclosure.

It is to be understood that the phraseology or terminology used herein is for the purpose of description and not of limitation. The breadth and scope of the present disclosure should not be limited by any of the above-described exemplary embodiments, but should be defined in accordance with the following claims and their equivalents.

## Claims

1. A glove (100), comprising:
a palm portion;
a wrist portion (102) extending from the palm portion; and
finger portions (106) extending from the palm portion, the finger portions (106) comprising:
an outer skin (116);
an inner skin (118); and
a core (126) disposed between the outer skin (116) and the inner skin (118) and extending from the inner skin (118) and toward the outer skin (116);
wherein the outer skin (116), the inner skin (118), and the core (126) are integrally formed.

2. The glove (100) of claim 1, wherein the core (126) comprises struts (112) extending from the inner skin (118) and toward the outer skin (116), wherein the struts (112) are oriented perpendicular to one or more of the outer skin (116) or the inner skin (118).

3. The glove (100) of claim 1 or 2, wherein the core (126) comprises struts (112) extending from the inner skin (118) and toward the outer skin (116), wherein the struts (112) are oriented at an angle greater than or equal to 0 degrees and less than or equal to 90 degrees relative to one or more of the outer skin (116) or the inner skin (118).

4. The glove (100) of any one of the preceding claims, wherein the core (126) comprises struts (112) coupled directly to the inner skin (118) and the outer skin (116).

5. The glove (100) of any one of the preceding claims, wherein one or more of the outer skin (116) or the inner skin (118) are devoid of unit cells arranged in a repeated lattice structure.

6. The glove (100) of any one of the preceding claims, wherein one or more of the outer skin (116) or the inner skin (118) comprises a plurality of continuous beams (103) extending adjacent to each other,
wherein the glove preferably comprises struts (112) that extend from a continuous beam (103) of the outer skin (116) to a continuous beam (103) of the inner skin (118).

7. The glove (100) of claim 6, wherein a spacing distance (109) between adjacent, continuous beams (103) is constant along a specified length, and/or
wherein a spacing distance (109) between adjacent, continuous beams (103) varies along a specified length, and/or
wherein two or more adjacent continuous beams (103) merge together at a surface contour of the glove (100), and/or
wherein one or more of the plurality of continuous beams (103) extends continuously along a distance of at least 5 centimeters.

8. The glove (100) of any one of the preceding claims, wherein at least a portion (104) of one or more of the outer skin (116) or the inner skin (118) comprises a continuous, non-porous skin.

9. The glove (100) of any one of the preceding claims, wherein the inner skin (118) defines a surface contour that faces a hand of a user during use, and the outer skin (116) defines a surface contour that faces away from the hand of the user during use.

10. A glove (100), comprising:
a palm portion;
a wrist portion (102) extending from the palm portion; and
finger portions (106) extending from the palm portion;
wherein the palm portion and the finger portions (106) comprise:
an outer skin (116);
an inner skin (118); and
a core (126) disposed between the outer skin (116) and the inner skin (118) and extending from the inner skin (118) and toward the outer skin (116);
wherein the outer skin (116), the inner skin (118), and the core (126) are integrally formed.

11. The glove (100) of claim 10, wherein the core (126) comprises struts (112) extending from the inner skin (118) and toward the outer skin (116), wherein the struts (112) are oriented perpendicular to one or more of the outer skin (116) or the inner skin (118).

12. The glove (100) of claim 10 or 11, wherein the core (126) comprises struts (112) extending from the inner skin (118) and toward the outer skin (116), wherein the struts (112) are oriented at an angle greater than or equal to 0 degrees and less than or equal to 90 degrees relative to one or more of the outer skin (116) or the inner skin (118).

13. The glove (100) of any one of the preceding claims 10 to 12, wherein the core (126) comprises struts (112) coupled directly to the inner skin (118) and the outer skin (116).

14. The glove (100) of any one of the preceding claims 10 to 13, wherein one or more of the outer skin (116) or the inner skin (118) are devoid of unit cells arranged in a repeated lattice structure.

15. The glove (100) of any one of the preceding claims 10 to 14, wherein one or more of the outer skin (116) or the inner skin (118) comprises a plurality of continuous beams (103) extending adjacent to each other,
wherein the glove preferably comprises struts (112) that extend from a continuous beam (103) of the outer skin (116) to a continuous beam (103) of the inner skin (118).
